# EUROPÄISCHE PATENTANMELDUNG

(11) **EP 2 756 914 A1**
(43) Veröffentlichungstag der Anmeldung: **23.07.2014**
(21) Anmeldenummer: 13151874.8
(22) Anmeldetag: 18.01.2013
(51) Int. Cl.: B23K 35/30, B23K 35/40

(54) **Lotlegierung**

(71) Anmelder: Umicore AG & Co. KG, 63457 Hanau-Wolfgang (DE); Leibniz-Institut für Festkörper- und Werkstoffforschung Dresden e.V., 01069 Dresden (DE)
(72) Erfinder: Wiehl, Gunther, 07743 Jena (DE); Silze, Frank, 01665 Triebischtal (DE); Kempf, Bernd, 63839 Kleinwallstadt (DE)

(57) **Zusammenfassung**

Es werden neue Legierungen beschrieben, die in der Verbindungstechnik anwendbar sind und verbesserte Benetzungseigenschaften aufweisen.

## Beschreibung

Es ist bekannt, Metallteile, z. B. Stahlteile, Kupfer und Kupferlegierungen, Nickel und Nickellegierungen, Messinglegierungen oder metallisierte Keramiken, unter Verwendung von nichteisenhaltigem Lot zu löten. Typische Lote umfassen Silber-, Gold-, Nickel- und Kupferlote. Silberlote sind teurer und schmelzen im Allgemeinen bei niedrigeren Temperaturen als Kupferlegierungen.

Trotz verbreiteter Verwendung von Silberloten bleiben Erfordernisse für eine Legierung bestehen, wie zum Beispiel verbesserte Löteigenschaften auf Stahlsubstraten und die Reduzierung des erforderlichen Silbergehaltes. Silber-Weichlot-oder-Hartlotlegierungen mit Mangan und/oder Nickel mit Kupfergehalt sind z. B. beschrieben in JP 57-149022, JP 57-149093 oder in US-A-2 303 272. Ferner wird Löten von Stahl oder aus freien Stahllegierungen üblicherweise mit den bekannten Lotlegierungen "Braze 580" und "Braze 655" durchgeführt, auf Basis von Silber mit Beteiligung von Cu und Mn oder ferner enthaltend Nickel (Braze 655). Dementsprechend wäre es wünschenswert, eine Silberlotlegierung mit verbesserter Benetzbarkeit zur Verfügung zur stellen.

Es bestand die Aufgabe, eine neue, im Wesentlichen zinkfreie (und damit für Vakuumanwendungen taugliche) Lotlegierung bereit zu stellen, welche eine hohe Kaltverformbarkeit, gute Benetzung von Edel- und Baustählen und einer Arbeitstemperatur von 750°C bis 900 °C bereit zu stellen.

Die Aufgabe wird gelöst durch eine Lotlegierung enthaltend 20 Gew.-% bis 44 Gew.-% Silber, 5 Gew.-% bis 15 Gew.-% Gallium und ad 100 Gew.-% Kupfer, wobei die Bestandteile unvermeidbare Verunreinigungen enthaltend können.

### Kurze Beschreibung der Erfindung

1. Lotlegierungen enthaltend 41 Gew.-% bis 75 Gew.-% Kupfer, 20 Gew.-% bis 44 Gew.-% Silber und 5 Gew.-% bis 15 Gew.-% Gallium, wobei die Bestandteile zu 100 Gew.-% ergänzen und unvermeidbare Verunreinigungen enthaltend können.
2. Lotlegierungen nach Punkt 1 enthaltend 25 bis 44 Gew.-% oder 30 bis 44 Gew.-Silber.
3. Lotlegierungen nach Punkt 1 enthaltend 45 bis 60 Gew.-% Kupfer.
4. Lotlegierungen nach Punkt 1 , 2 oder 3, enthaltend 6 Gew.-% bis 14 Gew.-% Gallium.
5. Lotlegierungen nach einem oder mehreren der vorstehenden Punkte, enthaltend 20 Gew.-% bis 44 Gew.-% Silber und 5 Gew.-% bis 15 Gew.-% Gallium, 0,1 Gew.-% bis 15 Gew.-% (oder 0,1 Gew.-% bis 10 Gew.-%) weiterer Legierungselemente, ausgewählt aus der Gruppe bestehend aus Indium, Zinn, Germanium, Titan, Mangan, Silizium, Nickel und deren Kombinationen und ad 100 Gew.-% Kupfer, wobei sich die Bestandteile zu 100 Gew.-% ergänzen und unvermeidbare Verunreinigungen enthaltend können.
6. Lotlegierungen nach Punkt 5, wobei Indium in Kombination mit Zinn, Titan oder Mangan als weiteres Element vorhanden ist.
7. Lotlegierungen nach einem oder mehreren der vorstehenden Punkte, enthaltend 0,5 Gew.-% bis 7 Gew.-% Indium.
8. Lotlegierungen nach einem oder mehreren der vorstehenden Punkte, enthaltend 0,3 Gew.-% bis 3 Gew.-% Zinn.
9. Lotlegierungen nach einem oder mehreren der vorstehenden Punkte, enthaltend 0,3 Gew.-% bis 3 Gew.-% Germanium.
10. Lotlegierungen nach einem oder mehreren der vorstehenden Punkte, enthaltend 0,1 Gew.-% bis 4 Gew.-% Titan.
11. Lotlegierungen nach einem oder mehreren der vorstehenden Punkte, enthaltend 0,5 Gew.-% bis 15 Gew.-% oder 0,5 Gew.-% bis 10 Gew.-% Mangan.
12. Lotlegierungen nach einem oder mehreren der vorstehenden Punkte, enthaltend 0,1 Gew.-% bis 1 Gew.-% Silizium.
13. Lotlegierungen nach einem oder mehreren der vorstehenden Punkte, enthaltend 0,1 Gew.-% bis 5 Gew.-% oder 1 Gew.-% bis 4 Gew.-% Nickel.
14. Lotlegierung, insbesondere nach einem der vorstehenden Punkte, bestehend aus 5 bis 15 Gew.-% Gallium, wobei die verbleibende Zusammensetzung (ad 100 Gew.-%) Ag, Cu im Verhältnis von 25 : 61 bis 44 : 45 enthält.
15. Lotlegierungen nach einem oder mehreren der vorstehenden Punkte, wobei das Gewichtsverhältnis von Kupfer zu Silber Cu/Ag 1 bis 2,1 beträgt.
16. Lotlegierungen nach einem oder mehreren der vorstehenden Punkte, wobei das Gewichtsverhältnis von Kupfer zu Gallium Cu/Ga 4,5 bis 7,5 beträgt.
17. Verwendung der Lotlegierungen nach einem oder mehreren der vorstehenden Punkte, als Vakuumhartlot.
18. Verwendung der Lotlegierungen nach einem oder mehreren der vorstehenden Ansprüche als Lot in Vakuumanwendungen, Abdichtung von oder gegen Vakuum, Vakuumschaltkammern, zum Löten von Kontakten, Löten von Schaltern, in der Automobilindustrie, Löten von Werkzeugen, Löten von Hartmetallen, Lötungen im Bereich Kälte oder Klima (HVAC), Lötungen im Anlagen- und Sondermaschinenbau, Lötungen bei Haushaltsgeräten, wie beispielsweise Weiße Ware, Lötungen bei Schmuck und deren Kombinationen.
19. Ein geformter Gegenstand, enthaltend eine Lotlegierung nach einem oder mehreren der vorstehenden Punkte in Kontakt mit mindestens einem Substrat.
20. Ein geformter Gegenstand nach Punkt 19, wobei das Substrat ausgewählt ist aus der Gruppe bestehend aus Kupfer und Kupferlegierungen, Nickel und Nickellegierungen, Messinglegierungen, Baustahl- (z.B. S235), Edelstahlsorten (z.B. 1.4301 / 1.4306 / 1.4401 / 1.4404 / 1.4571) oder vernickelten, verkupferten, oder vergoldeten Keramiken und deren Kombinationen.
21. Verfahren zur Herstellung von geformten Gegenständen aus Lotlegierungen nach einem oder mehreren der vorstehenden Punkte, wobei die Lotlegierungen bis zu einer erzielbaren Dickenabnahme beim Kaltwalzen von größer als etwa 60%, oder größer als etwa 80% und bis zu etwa 96% oder etwa 99 % oder etwa 99,9% kalt umgeformt wird, ohne eine Wärmebehandlung durchzuführen.
22. Verfahren nach Punkt 21, wobei die Umformung durch Walzen, Schmieden, Drahtziehen oder Strangpressen erfolgt.
23. Verfahren nach Punkt 21 oder 22, wobei in einem weiteren Schritt eine Wärmebehandlung durchgeführt und anschließend ein weiteres Kaltumformen erfolgt.
24. Verfahren nach Punkt 23, wobei die Temperatur der Wärmebehandlung 400°C bis 600°C oder 400°C bis 550°C beträgt oder für eine Zeitdauer von 30 Minuten bis 300 Minuten oder von 60 Minuten bis 150 Minuten durchgeführt wird.
25. Verfahren zum Löten von Substraten, wobei eine Lotlegierung nach einem der Punkte 1 bis 16 eingesetzt wird und die Löttemperatur in einem Bereich mit einer Untergrenze von 0,3* (TL-Ts)+Ts und einer Obergrenze von TL+ 50 Kelvin liegt, wobei TL die Liquidustemperatur und Ts die Solidustemperatur der jeweiligen Lotlegierung ist.
26. Verfahren nach Punkt 25, wobei das Substrat ausgewählt ist aus der Gruppe bestehend aus Kupfer und Kupferlegierungen, Nickel und Nickellegierungen, Eisen oder Eisenlegierungen, Messinglegierungen, Baustahl- (z.B. S235), Edelstahlsorten (z.B. 1.4301 / 1.4306 / 1.4401 / 1.4404 / 1.4571), Hartmetalle, Hartmetallverbundwerkstoffe, Kontaktwerkstoffe wie z.B. CuCr-, AgSnO2- und AgWC-Werkstoffe oder vernickelten, verkupferten, oder vergoldeten Keramiken und deren Kombinationen.
27. Geformter Gegenstand erhältlich nach einem der Punkte 21 bis 26.
28. Verwendung nach Punkt 17 oder 18, Geformter Gegenstand nach einem der Punkte 19, 20 oder 27 sowie Verfahren nach einem der Punkte 25 bis 26, wobei sich zwischen dem Lot und mindestens einem Substrat eine Interdiffusionszone ausbildet.
29. Verwendung, Verfahren oder geformter Gegenstand nach Punkt 28, wobei das Substrat Eisen oder Eisenlegierungen oder Edelstahl wie zum Beispiel Edelstahl 1.4404, ist.

### Detaillierte Beschreibung der Erfindung

Die Lotlegierung enthält 20 Gew.-% bis 44 Gew.-% Silber, 5 Gew.-% bis 15 Gew.-% Gallium und ad 100 Gew.-% Kupfer, wobei die Bestandteile unvermeidbare Verunreinigungen enthalten können.

Die Lotlegierungen enthalten 41 Gew.-% bis 75 Gew.-% oder 45 bis 60 Gew.-% Kupfer, 20 Gew.-% bis 44 Gew.-% Silber, oder 25 bis 44 Gew.-% oder 30 bis 44 Gew.-Silber, und 5 Gew.-% bis 15 Gew.-% oder 6 Gew.-% bis 14 Gew.-% Gallium, wobei die Bestandteile sich zu 100 Gew.-% ergänzen und unvermeidbare Verunreinigungen enthaltend können.

In einer spezifischen Ausführungsform kann die Lotlegierung 20 Gew.-% bis 44 Gew.-% Silber, 5 Gew.-% bis 15 Gew.-% Gallium, 0,1 Gew.-% bis 15 Gew.-% oder 0,1 Gew.-% bis 10 Gew.-% weiterer Legierungselemente ausgewählt aus der Gruppe bestehend aus Indium, Zinn, Germanium, Titan, Mangan, Silizium, Nickel und deren Kombinationen und ad 100 Gew.-% Kupfer enthalten, wobei sich die Bestandteile zu 100 Gew.-% ergänzen und unvermeidbare Verunreinigungen enthaltend können.

Die Lotlegierungen enthalten 41 Gew.-% bis 75 Gew.-% oder 45 bis 60 Gew.-% Kupfer, 20 Gew.-% bis 44 Gew.-% Silber, oder 25 bis 44 Gew.-% oder 30 bis 44 Gew.-Silber, 5 Gew.-% bis 15 Gew.-% oder 6 Gew.-% bis 14 Gew.-% Gallium, sowie 0,1 Gew.-% bis 15 Gew.-% oder 0,1 Gew.-% bis 10 Gew.-% weiterer Legierungselemente ausgewählt aus der Gruppe bestehend aus Indium, Zinn, Germanium, Titan, Mangan, Silizium, Nickel und deren Kombinationen, wobei die Bestandteile sich zu 100 Gew.-% ergänzen und unvermeidbare Verunreinigungen enthaltend können.

In einer weiteren spezifischen Ausführungsform enthält die Lotlegierung Indium in Kombination mit Zinn, Titan, Mangan oder deren Kombinationen.

Die Lotlegierung kann weiter 0,5 Gew.-% bis 7 Gew.-% Indium, 0,3 Gew.-% bis 3 Gew.-% Zinn, 0,3 Gew.-% bis 3 Gew.-% Germanium, 0,1 Gew.-% bis 4 Gew.-% Titan, 0,5 Gew.-% bis 15 Gew.-% oder auch 0,5 Gew.-% bis 10 Gew.-% Mangan, 0,1 Gew.-% bis 1 Gew.-% Silizium, 0,1 Gew.-% bis 5 Gew.-% oder 1 Gew.-% bis 4 Gew.-% Nickel oder deren Kombinationen in den entsprechenden Mengen enthalten, wobei sich die Bestandteile zu 100% ergänzen und unvermeidbare Verunreinigungen enthalten können.

Die Legierungen können auch insgesamt bis zu 0,15 Gew.-% an tolerierten, nicht vermeidbaren Verunreinigungen enthalten, z. B. Lithium, Natrium, Kalium, Rubidium, Cäsium, Beryllium, Magnesium, Calcium, Strontium, Barium, Antimon, Selen, Tellur, Eisen, Zink, Silicium, Phosphor, Schwefel, Platin, Palladium, Blei, Gold, Aluminium, Zinn, Germanium, Kohlenstoff, Cadmium, Scandium, Lanthan, Cer, Praseodym, Neodym, Promethium, Samarium, Europium, Yttrium, Gadolinium, Terbium, Dysprosium, Holmium, Erbium, Thulium, Ytterbium, Lutetium und Sauerstoff. Der Gehalt von Kohlenstoff sollte nicht größer sein als 0,005 Gew.-%, die Gehalte von Cadmium, Phosphor, Blei und Zink nicht größer als jeweils 0,01 Gew.-%.

Der Gesamtgehalt der Menge an Lithium, Natrium, Kalium, Rubidium, Cäsium, Beryllium, Magnesium, Calcium, Strontium, Barium, Antimon, Selen, Tellur, Schwefel beträgt insbesondere 0,01 Gew.-% oder weniger.

Besonders brauchbare Lotlegierungen umfassen: (1) eine Lotlegierung, bestehend aus 40 Gew.-% Silber, 50 Gew.-% Kupfer und 10 Gew.-% Gallium; oder (2) eine Lotlegierung, bestehend aus 40 Gew.-% Silber, 46,5 Gew.-% Kupfer, 10 Gew.-% Gallium, 3 Gew.-% Indium und 0,5 Gew,-% Zinn; oder (3) eine Lotlegierung, bestehend aus 5 bis 15 Gew.-% Gallium, wobei die verbleibende Zusammensetzung (ad 100 Gew.-%) Ag, Cu im proportionalen Verhältnis von 25 : 61 bis 44 : 45 ist. Das Gewichtsverhältnis von Kupfer zu Silber Cu/Ag beträgt im Allgemeinen 1 bis 2,1, das Gewichtsverhältnis von Kupfer zu Gallium Cu/Ga im Allgemeinen 4,5 bis 7,5.

Die Lotlegierung kann auf jegliche in der Technik bekannte Weise erhalten und unter Verwendung aller in der Technik bekannten Weisen in die gewünschte Form gegossen werden. Beispielsweise kann die Lotlegierung in Streifenform, Drahtform, Stangenform, Plattenform, Folienform, Rohform, Pulverform, Schrotform, Plättchenform oder Pastenform vorliegen. Die Legierung kann beispielsweise durch Kokillenguss hergestellt werden. Zur Erzeugung eines homogeneren Gefüges ist auch die Verwendung von kontinuierlichem Strangguss oder eines Legierungsgranulators oder der Legierungsverdüsung möglich.

Ebenso kann eine solche Legierungspulverherstellung gefolgt werden von einer anschließenden Kompaktierung wie beispielsweise kontinuierliches Pulverstrangpressen, welches auch als unter dem Namen TEMCONEX® bekannt ist. Ebenso ist eine Weiterverarbeitung des Pulvers durch Pressen, beispielsweise kaltisostatischem Pressen (Cold Isostatic Pressing, CIP) mit anschließendem Sintern und Strangpressen möglich.

Die Lotlegierung kann bei einer Temperatur in einem Bereich von ca. 750°C bis 900°C, oder von ca. 780°C bis ca. 830°C, über eine Zeit hartgelötet werden, welche ausreichend ist, um die Lotlegierung auf ein Substrat schmelzen zu lassen, welches beispielsweise aus einem eisenhaltigen Material, z. B. Stahl oder rostfreiem Stahl, gebildet ist. Gut geeignet sind beispielsweise ebenfalls Baustahl- (z.B. S235) sowie Edelstahlsorten (z.B. 1.4301 / 1.4306 / 1.4401 / 1.4404 / 1.4571). Mit Verwendung der Legierungen der vorliegenden Erfindung kann das Löten durchgeführt werden unter Verwendung eines Ofens, lokal unter Verwendung einer Lötlampe, unter Verwendung eines Induktionserhitzers, Eintauchen in ein Lot- oder Flussmittelbad, durch Widerstandserhitzen, Lasererhitzen oder Infraroterhitzen. Abhängig von dem verwendeten Lötverfahren kann das Löten in einer Inertgasatmosphäre, z. B. Argonatmosphäre, oder einer anderen Art von Schutzatmosphäre durchgeführt werden. Die Lotlegierung der vorliegenden Erfindung schmilzt bei diesen Temperaturen und benetzt das eisenhaltige Substratmaterial ohne Schwierigkeiten, um verbunden zu werden, ohne das eisenhaltige Substratmaterial zu schmelzen. Oft bildet sich bei Verwendung der Lotlegierungen eine I nterdiffusionszone aus, in welcher das Substratmaterial angelöst wird. Dies ist beispielsweise oft bei Eisenlegierungen wie Stählen in Verbindung mit den Lotlegierungen zu beobachten. Eine derartige Interdiffusionszone tritt beim Löten auf und ist als aktive Wechselwirkung zwischen Lot und Substrat vorteilhaft und erwünscht. Bei silberreichen Loten des Standes der Technik wie zum Beispiel AgCu28 oder Ag60Cu27In13 tritt eine solche Interdiffusionszone beim Löten von Edelstählen im Allgemeinen nicht auf.

Die Lotlegierung der vorliegenden Erfindung kann unter Anderem verwendet werden, um Stahlflächen hartzulöten, insbesondere Flächen aus rostfreiem Stahl. Statt einem Substrat aus einer eisenhaltigen Legierung können ebenso auch Kupfer oder Kupferlegierungen, Nickel oder Nickellegierungen, Messinglegierungen, Hartmetalle, Hartmetallverbundwerkstoffe, Kontaktwerkstoffe wie z.B. CuCr-, AgSnO2- und AgWC-Werkstoffe oder vernickelten/verkupferten/vergoldeten Keramiken verwendet werden.

Die vorliegende Patentanmeldung betrifft daher auch entsprechende geformte Gegenstände.

Die Lotlegierungen sind zum Beispiel für Vakuumanwendungen geeignet, wie beispielsweise als Abdichtung von oder gegen Vakuum, in Vakuumschaltkammern, Röntgenröhren oder im Kühlerbau, aber auch zum Löten von Kontakten, in Schaltern oder der Automobilindustrie. Auch zum Löten von Werkzeugen wie beispielsweise beim Löten von Hartmetallen oder Lötungen im Bereich Kälte oder Klima, im Anlagen- und Sondermaschinenbau sind die Lotelegierungen geeignet. Lötungen bei Haushaltsgeräten, wie beispielsweise Weiße Ware oder bei Schmuck, sind ebenfalls möglich.

Ein Vorteil der Lotlegierungen liegt in deren guter Kaltverformbarkeit trotz hoher Galliumkonzentration in der Legierung. Einerseits verbessert diese Eigenschaft die mechanische Stabilität der Lotverbindung. Andererseits kann die Lotlegierung damit leichter durch Walzen, Schmieden, Drahtziehen oder Strangpressen umgeformt werden, insbesondere beim Kaltumformen durch Walzen, Schmieden oder Drahtziehen, da bis zu einer erzielbaren Dickenabnahme beim Kaltwalzen von größer als etwa 60%, oder größer als etwa 80% und bis zu etwa 96% oder etwa 99 % oder etwa 99,9% ohne eine Wärmebehandlung wie einer Erholungs- oder Rekristallisationsglühung gearbeitet werden kann. Anschließend, also nach einer Kaltumformung von etwa 60% bis etwa 99,9%, kann eine Wärmebehandlung durchgeführt und erneut ein Kaltumformen von etwa 60% bis etwa 99,9% erfolgen. Eine derartige Wärmebehandlung kann bei Temperaturen von 400°C bis 600°C, oder von 400°C bis 550°C durchgeführt werden. Die Zeitdauer der Wärmebehandlung kann im Allgemeinen bei 30 Minuten bis 300 Minuten liegen, oder bei 60 Minuten bis 150 Minuten, oder 90 Minuten bis 140 Minuten. Die Wärmebehandlung kann in Vakuum oder einem Schutzgas wie Argon oder Stickstoff oder in reduzierender Atmosphäre wie Formiergas (z.B. N₂/H₂ 95/5, N₂/H₂ 80/20, N₂/H₂ 50/50) oder Wasserstoff, durchgeführt werden.

Bei Verwendung der Lotlegierungen in einer Inertgasatmosphäre, z. B. Argonatmosphäre, muß kein Flussmittel verwendet werden.

Die beschriebenen Lotlegierungen können auch auf nicht oder nicht vollständig desoxidierten Oberflächen, also Oberflächen mit unvollständiger Oxidentfernung, verwendet werden. Die beschriebenen Lotlegierungen benetzen diese gut und lassen sich gut löten. So können beispielsweise auch chromhaltige Edelstähle gelötet werden, die eine natürliche Schicht aus Chrom (III)-oxid auf der Oberfläche aufweisen, ohne dass die Oberfläche durch Elektropolieren oder Galvanisieren mit Gold, Nickel, Kupfer oder deren Kombinationen modifiziert werden muss.

Die Lötung kann mit den Lotlegierungen gut in einem bestimmten Temperaturintervall durchgeführt werden, dessen Obergrenze durch TL+50 Kelvin und dessen Untergrenze durch 0,3*(TL-Ts)+Ts definiert wird, wobei TL die Liquidustemperatur und Ts die Solidustemperatur der jeweiligen Lotlegierung ist.

Eine Ausführungsform betrifft daher auch ein Verfahren zum Löten von Substraten, vorzugsweise aus Stahl, wobei die Lotlegierung eingesetzt wird und die Löttemperatur in einem Bereich mit einer Untergrenze von 0,3*(TL-Ts)+Ts und einer Obergrenze von TL+ 50 Kelvin liegt, wobei TL die Liquidustemperatur und Ts die Solidustemperatur der jeweiligen Lotlegierung ist.

### Beispiele

Die aufgeführten Legierungen wurden durch Kokillenguss der entsprechenden Legierungsbestandteile erhalten. Das Schmelzen erfolgte in einem Induktionsofen. Die Größe der Ansätze betrug je 500 g der Lotlegierung. Die erhaltenen Legierungen wurden durch Walzen weiter verarbeitet und bei einer Temperatur von 830°C zum Verlöten von Edelstahl 1.4404 auf einem Substrat aus gleichem Material (Edelstahl1.4404) im Vakuum ofengelötet. Die Benetzung wurde visuell beurteilt. Die Kaltverformbarkeit wurde durch Dickenabnahme beim Walzen und die Solidus- bzw. Liquidustemperaturen durch Differenzkalorimetie (DSC) bestimmt. Für die Legierung mit der Zusammensetzung CuAg40Ga10 betrug die erzielbare Dickenabnahme beim Kaltwalzen ohne Wärmebehandlung 96%, die Solidustemperatur 724°C und die Liquidustemperatur 846°C.

| Beispiel | Cu | Ag | Ga | Mn | In | Sn | Ge | Ti | Si | Ni | Cu/Ag | Cu/Ga | Ag/Ga | B | K | L |
|---|---|---|---|---|---|---|---|---|---|---|---|---|---|---|---|---|
| 1 | 62,0 | 25 | 13 | | | | | | | | 2,5 | 4,8 | 1,92 | ++ | + | ++ |
| 2 | 60,0 | 25 | 5 | 10 | | | | | | | 2,4 | 12,0 | 5,00 | ++ | ++ | + |
| 3 | 57,0 | 25 | 5 | 13 | | | | | | | 2,3 | 11,4 | 5,00 | ++ | + | ++ |
| 4 | 55,0 | 30 | 5 | 10 | | | | | | | 1,8 | 11,0 | 6,00 | ++ | ++ | ++ |
| 5 | 60,0 | 30 | 5 | 5 | | | | | | | 2,0 | 12,0 | 6,00 | ++ | ++ | + |
| 6 | 57,0 | 30 | 5 | 5 | 3 | | | | | | 1,9 | 11,4 | 6,00 | ++ | ++ | ++ |
| 7 | 59,0 | 30 | 5 | 5 | | 1 | | | | | 2,0 | 11,8 | 6,00 | ++ | ++ | ++ |
| 8 | 59,8 | 30 | 10 | | | | | | 0,25 | | 2,0 | 6,0 | 3,00 | ++ | ++ | ++ |
| 9 | 59,5 | 30 | 10 | | | | | | 0,50 | | 2,0 | 6,0 | 3,00 | ++ | ++ | ++ |
| 10 | 55,0 | 35 | 10 | | | | | | | | 1,6 | 5,5 | 3,50 | ++ | ++ | ++ |
| 11 | 50,0 | 40 | 10 | | | | | | | | 1,3 | 5,0 | 4,00 | ++ | ++ | ++ |
| 12 | 48,0 | 42 | 10 | | | | | | | | 1,1 | 4,8 | 4,20 | ++ | ++ | ++ |
| 13 | 49,0 | 42 | 9 | | | | | | | | 1,2 | 5,4 | 4,67 | ++ | ++ | ++ |
| 14 | 51,0 | 41 | 8 | | | | | | | | 1,2 | 6,4 | 5,13 | ++ | ++ | ++ |
| 15 | 50,0 | 42 | 8 | | | | | | | | 1,2 | 6,3 | 5,25 | ++ | ++ | ++ |
| 16 | 52,0 | 38 | 10 | | | | | | | | 1,4 | 5,2 | 3,80 | ++ | ++ | ++ |
| 17 | 51,0 | 40 | 9 | | | | | | | | 1,3 | 5,7 | 4,44 | ++ | ++ | ++ |
| 18 | 51,0 | 38 | 11 | | | | | | | | 1,3 | 4,6 | 3,45 | ++ | ++ | ++ |
| 19 | 53,0 | 36 | 11 | | | | | | | | 1,5 | 4,8 | 3,27 | ++ | ++ | ++ |
| 20 | 47,0 | 40 | 10 | | 3 | | | | | | 1,2 | 4,7 | 4,00 | ++ | ++ | ++ |
| 21 | 46,5 | 40 | 10 | | 3 | 0,50 | | | | | 1,2 | 4,7 | 4,00 | ++ | ++ | ++ |
| 22 | 49,5 | 40 | 10 | | | | 0,50 | | | | 1,2 | 5,0 | 4,00 | ++ | ++ | ++ |
| 23 | 49,0 | 40 | 10 | | | 1 | | | | | 1,2 | 4,9 | 4,00 | ++ | ++ | ++ |
| 24 | 48,0 | 40 | 10 | | | | | | | 2 | 1,2 | 4,8 | 4,00 | ++ | ++ | ++ |
| 25 | 46,0 | 42 | 10 | | | | | | | 2 | 1,1 | 4,6 | 4,20 | ++ | ++ | ++ |
| 26 | 49,0 | 40 | 10 | | | | | 1 | | | 1,2 | 4,9 | 4,00 | ++ | ++ | ++ |
| 27 | 48,0 | 40 | 10 | | 1 | | | 1 | | | 1,2 | 4,8 | 4,00 | ++ | ++ | ++ |
| 28 | 45,0 | 40 | 5 | 10 | | | | | | | 1,1 | 9,0 | 8,00 | ++ | ++ | ++ |
| 29 | 50,0 | 40 | 5 | 5 | | | | | | | 1,3 | 10,0 | 8,00 | ++ | ++ | ++ |
| 30 | 47,0 | 40 | 5 | 5 | 3 | | | | | | 1,2 | 9,4 | 8,00 | ++ | ++ | ++ |
| 31 | 49,8 | 40 | 10 | | | | | | 0,25 | | 1,2 | 5,0 | 4,00 | ++ | ++ | ++ |
| 32 | 49,5 | 40 | 10 | | | | | | 0,50 | | 1,2 | 5,0 | 4,00 | ++ | ++ | ++ |
| 33 | 49,0 | 40 | 10 | | | | | 1 | | | 1,2 | 4,9 | 4,00 | ++ | ++ | ++ |
| 34 | 48,0 | 44 | 8 | | | | | | | | 1,1 | 6,0 | 5,50 | ++ | + | ++ |
| Vergleichsbeispiel 1 | 90,0 | 0 | 10 | | | | | | | | n.d. | 9,0 | 0,00 | ++ | ++ | ○ |
| 2 | 82,0 | 0 | 18 | | | | | | | | n.d. | 4,6 | 0,00 | ++ | ++ - | ○ |
| 3 | 80,0 | 10 | 10 | | | | | | | | 8,0 | 8,0 | 1,00 | ++ | ++ | ○ |
| 4 | 70,0 | 20 | 10 | | | | | | | | 3,5 | 7,0 | 2,00 | ++ | ++ | ++ - |
| 5 | 68,0 | 30 | 2 | | | | | | | | 2,3 | 34,0 | 15,00 | - | ++ | - |
| 6 | 60,0 | 40 | | | | | | | | | 1,5 | n.d. | n.d. | ○ | ++ | ○ |
| 7 | 58,0 | 40 | 2 | | | | | | | | 1,5 | 29,0 | 20,00 | - | ++ | - |
| 8 | 45,0 | 40 | 15 | | | | | | | | 1,1 | 3,0 | 2,67 | ++ | - | ++ |
| 9 | 40,0 | 40 | 20 | | | | | | | | 1,0 | 2,0 | 2,00 | ++ | ○ | ++ |
| 10 | 35,0 | 40 | 25 | | | | | | | | 0,9 | 1,4 | 1,60 | ++ | ○ | ++ |
| 11 | 25,0 | 40 | 15 | 20 | | | | | | | 0,6 | 1,7 | 2,67 | ++ | ○ | ++ |
| 12 | 35,0 | 50 | 15 | | | | | | | | 0,7 | 2,3 | 3,33 | ++ | ○ | ++ |
| 13 | 48,0 | 50 | 2 | | | | | | | | 1,0 | 24,0 | 25,00 | - | ++ | + |
| 14 | 40,0 | 50 | 10 | | | | | | | | 0,8 | 4,0 | 5,00 | ++ | - | ++ |
| 15 | 35,0 | 55 | 10 | | | | | | | | 0,6 | 3,5 | 5,50 | ++ | - | ++ |
| 16 | 40,0 | 60 | | | | | | | | | 0,7 | n.d. | n.d. | ○ | ++ | + |
| 17 | 30,0 | 60 | | | 10 | | | | | | 0,5 | n.d. | n.d. | ○ | + | ++ |
| 18 | 30,0 | 60 | | | | 10 | | | | | 0,5 | n.d. | n.d. | - | + | ++ |
| 19 | 35,0 | 60 | | | | | 5 | | | | 0,6 | n.d. | n.d. | + | - | ++ |
| 20 | 15,0 | 60 | 25 | | | | | | | | 0,3 | 0,6 | 2,40 | ++ | ○ | ++ |
| 21 | 25,0 | 60 | 15 | | | | | | | | 0,4 | 1,7 | 4,00 | ++ | ○ | ++ |
| 22 | 25,0 | 65 | 10 | | | | | | | | 0,4 | 2,5 | 6,50 | ++ | ○ | ++ |
| 23 | 20,0 | 70 | 10 | | | | | | | | 0,3 | 2,0 | 7,00 | ++ | ○ | ++ |
| 24 | 28,0 | 70 | 2 | | | | | | | | 0,4 | 14,0 | 35,00 | - | ++ | ++ |
| 25 | 28,0 | 72 | | | | | | | | | 0,4 | n.d. | n.d. | ○ | ++ | ++ |

Spalte B gibt das Benetzungs- und Fließverhalten auf Edelstählen an, K die Kaltverformbarkeit und L das Lötverhalten bei 830°C. Die Mengen der Legierungsbestandteile sind in Gewichtsprozent angegeben. Die Beurteilung von Benetzung- und Fließverhalten, des Lötverhaltens bei 830°C und der Kaltverformbarkeit sind mit ++ - sehr gut, + gut, ○ nicht gut - inakzeptabel bewertet. Das Kürzel "n.d." steht für Werte, die nicht bestimmbar sind.

## Patentansprüche

1. Lotlegierungen enthaltend 20 Gew.-% bis 44 Gew.-% Silber, 5 Gew.-% bis 15 Gew.-% Gallium und ad 100 Gew.-% Kupfer, wobei die Bestandteile unvermeidbare Verunreinigungen enthaltend können.

2. Lotlegierungen nach Anspruch 1 enthaltend 41 Gew.-% bis 75 Gew.-% Kupfer, 20 Gew.-% bis 44 Gew.-% Silber und 5 Gew.-% bis 15 Gew.-% Gallium, wobei die Bestandteile zu 100 Gew.-% ergänzen und unvermeidbare Verunreinigungen enthaltend können.

3. Lotlegierungen nach Anspruch 1 oder 2, enthaltend 25 bis 44 Gew.-% Silber.

4. Lotlegierungen nach einem oder mehreren der vorstehenden Ansprüche, enthaltend 45 bis 60 Gew.-% Kupfer.

5. Lotlegierungen nach Anspruch 1 , 2 oder 3, enthaltend 6 Gew.-% bis 14 Gew.-% Gallium.

6. Lotlegierungen nach einem oder mehreren der vorstehenden Ansprüche, enthaltend 20 Gew.-% bis 44 Gew.-% Silber und 5 Gew.-% bis 15 Gew.-% Gallium, 0,1 Gew.-% bis 15 Gew.-% weiterer Legierungselemente, ausgewählt aus der Gruppe bestehend aus Indium, Zinn, Germanium, Titan, Mangan, Silizium und deren Kombinationen und ad 100 Gew.-% Kupfer, wobei sich die Bestandteile zu 100 Gew.-% ergänzen und unvermeidbare Verunreinigungen enthaltend können.

7. Lotlegierungen nach einem oder mehreren der vorstehenden Punkte, enthaltend 0,5 Gew.-% bis 15 Gew.-% oder 0,5 Gew.-% bis 10 Gew.-% Mangan.

8. Lotlegierungen nach einem oder mehreren der vorstehenden Punkte, enthaltend 0,1 Gew.-% bis 5 Gew.-% Nickel und/oder 0,5 Gew.-% bis 7 Gew.-% Indium und/oder 0,3 Gew.-% bis 3 Gew.-% Zinn und/oder 0,3 Gew.-% bis 3 Gew.-% Germanium und/oder 0,1 Gew.-% bis 4 Gew.-% Titan und/oder 0,1 Gew.-% bis 1 Gew.-% Silizium.

9. Verwendung der Lotlegierungen nach einem oder mehreren der vorstehenden Ansprüche als Lot in Vakuumanwendungen, Abdichtung von oder gegen Vakuum, Vakuumschaltkammern, zum Löten von Kontakten, Löten von Schaltern, in der Automobilindustrie, Löten von Werkzeugen, Löten von Hartmetallen, Lötungen im Bereich Kälte oder Klima (HVAC), Lötungen im Anlagen- und Sondermaschinenbau, als Vakuumhartlot, Lötungen bei Haushaltsgeräten, wie beispielsweise Weiße Ware, Lötungen bei Schmuck und deren Kombinationen.

10. Ein geformter Gegenstand, enthaltend eine Lotlegierung nach einem oder mehreren der vorstehenden Punkte in Kontakt mit mindestens einem Substrat.

11. Verfahren zur Herstellung von geformten Gegenständen aus Lotlegierungen nach einem oder mehreren der vorstehenden Punkte, wobei die Lotlegierungen bis zu einer erzielbaren Dickenabnahme beim Kaltwalzen von größer als etwa 60% kalt umgeformt wird, ohne eine Wärmebehandlung durchzuführen.

12. Verfahren zum Löten von Substraten, wobei eine Lotlegierung nach einem der Ansprüche 1 bis 8 eingesetzt wird und die Löttemperatur in einem Bereich mit einer Untergrenze von 0,3*(TL-Ts)+Ts und einer Obergrenze von TL+50 Kelvin liegt, wobei TL die Liquidustemperatur und Ts die Solidustemperatur der jeweiligen Lotlegierung ist.

13. Ein geformter Gegenstand nach Anspruch 10 oder ein Verfahren nach Anspruch 12, wobei das Substrat ausgewählt ist aus der Gruppe bestehend aus Kupfer und Kupferlegierungen, Nickel und Nickellegierungen, Messinglegierungen, Baustahl- (z.B. S235), Edelstahlsorten (z.B. 1.4301 / 1.4306 / 1.4401 / 1.4404 / 1.4571), Hartmetalle, Hartmetallverbundwerkstoffe, Kontaktwerkstoffe oder vernickelten, verkupferten, oder vergoldeten Keramiken und deren Kombinationen.

14. Geformter Gegenstand erhältlich nach einem der Ansprüche 12 oder 13.

15. Verwendung nach Anspruch 9, Geformter Gegenstand nach einem der Ansprüche 10 oder 14 sowie Verfahren nach einem der Punkte 12 oder 13, wobei sich zwischen dem Lot und mindestens einem Substrat eine Interdiffusionszone ausbildet.

## Geänderte Patentansprüche

### Geänderte Patentansprüche gemäss Regel 137(2) EPÜ.

**1.** Lotlegierungen bestehend aus 41 Gew.-% bis 75 Gew.-% Kupfer, 20 Gew.-% bis 44 Gew.-% Silber, 5 Gew.-% bis 15 Gew.-% Gallium und optional 0,1 bis 15 Gew.-% weiterer Legierungsbestandteile ausgewählt aus der Gruppe bestehend aus Indium, Zinn, Germanium, Titan, Mangan, Silizium, Nickel und deren Kombinationen, wobei sich die Bestandteile zu 100 Gew.-% ergänzen und insgesamt bis zu 0,15 Gew.-% an unvermeidbaren Verunreinigungen enthalten können

**2.** Lotlegierungen nach Anspruch 1, wobei die Gehalte von Cadmium, Phosphor, Blei und Zink nicht größer als jeweils 0,01 Gew.-% sind.

**3.** Lotlegierungen nach Anspruch 1 oder 2, enthaltend 25 bis 44 Gew.-% Silber.

**4.** Lotlegierungen nach einem oder mehreren der vorstehenden Ansprüche, enthaltend 45 bis 60 Gew.-% Kupfer.

**5.** Lotlegierungen nach Anspruch 1, 2 oder 3, enthaltend 6 Gew.-% bis 14 Gew.-% Gallium.

**6.** Lotlegierungen nach einem oder mehreren der vorstehenden Ansprüche, ausgewählt aus (1) einer Lotlegierung bestehend aus 40 Gew.-% Silber, 50 Gew.-% Kupfer und 10 Gew.-% Gallium; (2) einer Lotlegierung, bestehend aus 40 Gew.-% Silber, 46,5 Gew.-% Kupfer, 10 Gew.-% Gallium, 3 Gew.-% Indium und 0,5 Gew,-% Zinn; (3) einer Lotlegierung, bestehend aus 5 bis 15 Gew.-% Gallium, Silber und Kupfer, wobei Silber und Kupfer im proportionalen Verhältnis von 25 : 61 bis 44 : 45 vorliegen.

**7.** Lotlegierungen nach einem oder mehreren der vorstehenden Ansprüche, enthaltend 0,5 Gew.-% bis 15 Gew.-% Mangan.

**8.** Lotlegierungen nach einem oder mehreren der vorstehenden Ansprüche, enthaltend 0,1 Gew.-% bis 5 Gew.-% Nickel und/oder 0,5 Gew.-% bis 7 Gew.-% Indium und/oder 0,3 Gew.-% bis 3 Gew.-% Zinn und/oder 0,3 Gew.-% bis 3 Gew.-% Germanium und/oder 0,1 Gew.-% bis 4 Gew.-% Titan und/oder 0,1 Gew.-% bis 1 Gew.-% Silizium.

**9.** Verwendung der Lotlegierungen nach einem oder mehreren der vorstehenden Ansprüche als Lot in Vakuumanwendungen, Abdichtung von oder gegen Vakuum, Vakuumschaltkammern, zum Löten von Kontakten, Löten von Schaltern, in der Automobilindustrie, Löten von Werkzeugen, Löten von Hartmetallen, Lötungen im Bereich Kälte oder Klima (HVAC), Lötungen im Anlagen- und Sondermaschinenbau, als Vakuumhartlot, Lötungen bei Haushaltsgeräten, wie beispielsweise Weiße Ware, Lötungen bei Schmuck und deren Kombinationen.

**10.** Ein geformter Gegenstand, enthaltend eine Lotlegierung nach einem oder mehreren der Ansprüche 1 bis 8 in Kontakt mit mindestens einem Substrat.

**11.** Verfahren zur Herstellung von geformten Gegenständen aus Lotlegierungen nach einem oder mehreren der Ansprüche 1 bis 8, wobei die Lotlegierungen bis zu einer erzielbaren Dickenabnahme beim Kaltwalzen von größer als 60% kalt umgeformt wird, ohne eine Wärmebehandlung durchzuführen.

**12.** Verfahren zum Löten von Substraten, wobei eine Lotlegierung nach einem der Ansprüche 1 bis 8 eingesetzt wird und die Löttemperatur in einem Bereich mit einer Untergrenze von 0,3*(TL-Ts)+Ts und einer Obergrenze von TL+50 Kelvin liegt, wobei TL die Liquidustemperatur und Ts die Solidustemperatur der jeweiligen Lotlegierung ist.

**13.** Ein geformter Gegenstand nach Anspruch 10, wobei das Substrat ausgewählt ist aus der Gruppe bestehend aus Kupfer und Kupferlegierungen, Nickel und Nickellegierungen, Messinglegierungen, Baustahl- (z.B. S235), Edelstahlsorten (z.B. 1.4301 / 1.4306 / 1.4401 / 1.4404 / 1.4571), Hartmetalle, Hartmetallverbundwerkstoffe, Kontaktwerkstoffe oder vernickelten, verkupferten, oder vergoldeten Keramiken und deren Kombinationen.

**14.** Geformter Gegenstand erhältlich nach Anspruch 12, wobei sich zwischen dem Lot und mindestens einem Substrat eine Interdiffusionszone ausbildet.
